# EUROPEAN PATENT APPLICATION

(11) **EP 4 412 285 A1**
(43) Date of publication of application: **07.08.2024**
(21) Application number: 22874196.3
(22) Date of filing: 28.04.2022
(51) Int. Cl.: H04W 24/02, H04W 56/00

(54) **INFORMATION CONFIGURATION METHOD, ELECTRONIC DEVICE AND STORAGE MEDIUM**

(30) Priority: 30.09.2021 CN 202111165701
(71) Applicant: ZTE Corporation, Shenzhen, Guangdong 518057 (CN)
(72) Inventor: TAN, Jie, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Savi, Massimiliano
(86) International application number: PCT/CN2022/090047
(87) International publication number: WO 2023/050798

(57) **Abstract**

An information configuration method, an electronic device and a storage medium. The method comprises: transmitting a data packet to a base station (110); and executing packet data convergence protocol repeat transmission according to feedback information of the received data packet (120). In the embodiments of the present application, the execution of a packet data convergence protocol repeat transmission function is triggered by means of feedback information of a data packet, such that the accuracy of data packet transmission is improved, and the data communication quality can be improved.

## Description

### CROSS-REFERENCE TO RELATED APPLICATION

This application is filed on the basis of the Chinese patent application No. 202111165701.7 filed September 30, 2021, and claims priority of the Chinese patent application, the entire contents of which are incorporated herein by reference.

### TECHNICAL FIELD

The present disclosure relates to the technical field of wireless communication, in particular to a method for configuring information, an electronic apparatus, and a storage medium.

### BACKGROUND

In the New Radio (NR) access technology standard, the parameter of the survival time (ST) is introduced to relax the requirements for the Quality of Service (QoS). The survival time can be the time that an application that consumes the communication service can continue without an expected message, where the term "expected" can include requirements such as timeliness and accuracy. The continuity of a communication service includes the following three conditions: first, the message needs to arrive in time; second, the receiver receives the undamaged message; third, the received message needs to be processed and sent from 3GPP 5G system to the target automation function. If at least one of the above conditions is not met, a timer is started, and the communication service for the application program is available within the fixed time of the timer. When the timer expires, the communication service of the application program is announced "unavailable". The survival time indicates the time that an application that utilizes the communication service can continue without an expected message. The survival time can be transferred as a part of time-sensitive communication assistance information (TSCAI) parameters, but the TSCAI may not always include the survival time. A session management function (SMF) determines and sends the survival time to the radio access network NG-RAN as a part of TSCAI, without special or N1 signaling exchange with a user equipment (UE). However, the Hybrid Automatic Repeat reQuest (HARQ)-NACK method has some shortcomings in uplink and downlink services, and further study is needed.

### SUMMARY

Provided are a method for configuring information, an electrical apparatus, and a storage medium in some embodiments of the present disclosure.

In an embodiment of the present disclosure, a method for configuring information is provided, the method is applied to a terminal device and includes, transmitting a data packet to a base station; and performing a packet data convergence protocol (PDCP) duplication according to a reception of feedback information for the data packet.

In an embodiment of the present disclosure, a method for configuring information is provided, the method is applied to a first node, and includes, sending parameter configuration information to a second node; where the parameter configuration information includes at least one of, clock type indication information, or clock synchronization accuracy indication information.

In an embodiment of the present disclosure, a method for configuring information is provided, the method is applied to a second node , and includes, acquiring parameter configuration information sent by a first node; where the parameter configuration information comprises at least one of, clock type indication information, or clock synchronization accuracy indication information; and performing a base station handover service according to the parameter configuration information.

In an embodiment of the present disclosure, an electronic apparatus is provided, which includes, at least one processor, and a storage device storing at least one program thereon, which when executed by the processor, causes the processor to carry out the method of any one of the embodiments described in the present disclosure.

In an embodiment of the present disclosure a computer-readable storage medium is provided, which stores thereon at least one program executable by at least one processor, which when executed by the processor, causes the processor to carry out the method of any one of the embodiments described in the present disclosure.

### BRIEF DESCRIPTION OF DRAWINGS

FIG. 1 depicts a flowchart showing a method for configuring information according to an embodiment of the present disclosure;
FIG. 2 depicts a flowchart showing another method for configuring information according to an embodiment of the present disclosure;
FIG. 3 depicts a flowchart showing another method for configuring information according to an embodiment of the present disclosure;
FIG. 4 depicts a flowchart showing another method for configuring information according to an embodiment of the present disclosure;
FIG. 5 depicts a flowchart showing another method for configuring information according to an embodiment of the present disclosure;
FIG. 6 depicts a flowchart showing another method for configuring information according to an embodiment of the present disclosure;
FIG. 7 depicts a schematic diagram showing a method for configuring information according to an embodiment of the present disclosure;
FIG. 8 depicts a schematic diagram showing another method for configuring information according to an embodiment of the present disclosure;
FIG. 9 depicts a schematic diagram showing a method for configuring information according to an embodiment of the present disclosure;
FIG. 10 depicts a schematic diagram showing a method for configuring information according to an embodiment of the present disclosure;
FIG. 11 depicts a schematic diagram showing another method for configuring information according to an embodiment of the present disclosure;
FIG. 12 depicts a flowchart showing a method for configuring information according to an embodiment of the present disclosure;
FIG. 13 depicts a flowchart showing another method for configuring information according to an embodiment of the present disclosure;
FIG. 14 depicts a schematic diagram showing a method for configuring information according to an embodiment of the present disclosure;
FIG. 15 depicts a schematic diagram showing another method for configuring information according to an embodiment of the present disclosure;
FIG. 16 depicts a schematic diagram showing a device for configuring information according to an embodiment of the present disclosure;
FIG. 17 depicts a schematic diagram showing another device for configuring information according to an embodiment of the present disclosure;
FIG. 18 depicts a schematic diagram showing another device for configuring information according to an embodiment of the present disclosure; and
FIG. 19 depicts a schematic diagram showing an electronic apparatus according to an embodiment of the present disclosure.

### DETAILED DESCRIPTION

It should be understood that the embodiments described here are illustrative but not limiting.

In the following description, the use of suffixes such as "module", "component" or "unit" to represent elements is only for the convenience of the description of the present disclosure, and they do not necessarily have a specific meaning. Therefore, "modules", "components" or "units" can be used in combination.

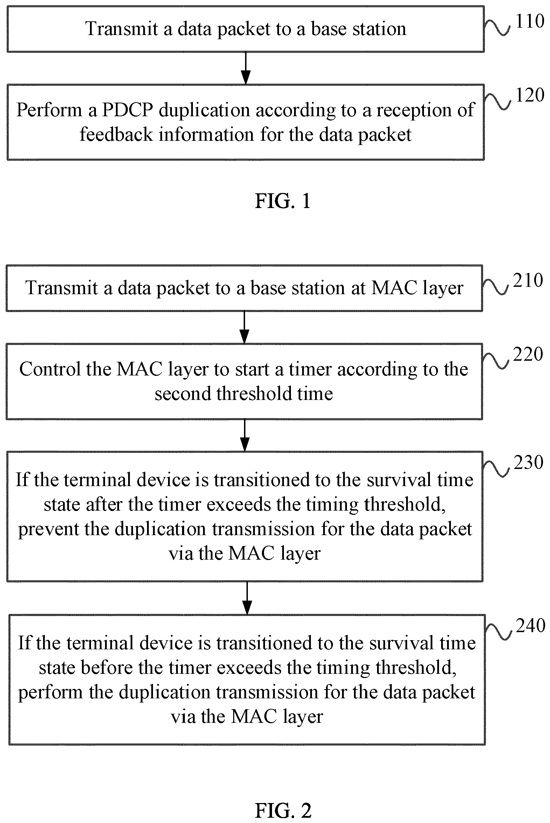

FIG. 1 depicts a flowchart showing a method for configuring information according to an embodiment of the present disclosure. This embodiment can be applied to the case of data retransmission by a terminal device. The method can be performed by a terminal device, and can be implemented by software and/or hardware. Referring to FIG. 1, the method includes the following operations.

At operation110, a data packet is transmitted to a base station.

In an embodiment of the present disclosure, a terminal device may send a data packet to the base station, where the data packet may be intended for transmission of data information or control information.

At operation 120, a packet data convergence protocol (PDCP) duplication is performed according to a reception of feedback information for the data packet.

The feedback information can be the feedback information generated by the base station according to the received data packet, and the feedback information can be configured to trigger the terminal device to perform the PDCP duplication transmission. The PDCP duplication transmission can realize repeated transmission of data packets that have a previous transmission failure.

The terminal device can receive the feedback information for the data packet and trigger the PDCP duplication transmission according to the received feedback information.

According to an embodiment of the present disclosure, the data packet is sent to the base station, and the PDCP duplication transmission is performed according to the feedback information corresponding to the data packet, so that the hybrid automatic repeat transmission is realized, the accuracy of data packet transmission is improved, and the communication quality can be enhanced.

On the basis of the above embodiment(s), the method further includes the operation in which, a timer is started in response to a transmission of the data packet to the base station.

In particular, the timer can be served as a device to determine the effective time of data retransmission, the timing of the timer can be configured by the base station. The timer can be configured to time the survival time.

The terminal device sends the data packet to the base station while starting the timer concurrently.

On the basis of the above embodiment(s), the method further includes stopping the timer, which includes, stopping the timer in response to the number of retransmission schedules of the data packet received by the media access control (MAC) layer being greater than or equal to the first threshold number before the timer exceeds the timing threshold.

The timing threshold can be the timing value set on the timer, and the value of the timing threshold can be set by the base station or preset according to a protocol. The first threshold number may be a critical number of retransmission schedules of data packets, which may be specified by the protocol or configured by the base station. The retransmission schedule can be the feedback information sent by the base station, and can correspond to the data packet sent by the terminal device, and is configured to request the schedule of the retransmission of the data packet.

In an embodiment of the present disclosure, when the time of the timer does not reach the time corresponding to the timing threshold, and if the number of retransmission schedules of the same data packet received by the terminal device at the MAC layer is greater than or equal to the first threshold number, the timer can be controlled to stop.

On the basis of the above embodiment(s), the method further includes stopping the timer, which includes, stopping the timer in response to the number of retransmission schedules of data packets received by the media access control layer being less than the first threshold number when the timer exceeds the timing threshold.

When the time of the timer reaches the time corresponding to the timing threshold, and if the number of the retransmission schedules for the data packet received by the terminal device at the MAC layer is less than the first threshold number, the timer can be controlled to stop.

On the basis of the above embodiment(s), the first threshold number is configured by the base station.

In an embodiment of the present disclosure, the first threshold number may be the critical value for the retransmission schedule for the same data packet, the retransmission schedule is received by the terminal device. The first threshold number may be configured by the base station.

FIG. 2 depicts a flowchart showing a method for configuring information according to another embodiment of the present disclosure, which embodies the embodiment described above. Referring to FIG. 2, the method includes the following operations.

At operation 210, a data packet is sent to the base station at the MAC layer.

The terminal device sends the data packets to the base station through the MAC layer.

At operation 220, the MAC layer is controlled to start a timer according to the second threshold time.

In an embodiment of the present disclosure, the terminal device initializes the timer at the MAC layer and sets the timing threshold of the timer as the second threshold time. It can be understood that the timer can be a software device and/or a hardware device and can be configured for timing.

At operation 230, if the terminal device enters the survival time state after the timer exceeds the timing threshold, then the duplication transmission of the data packet at the MAC layer is prevented.

The survival time can be the time that an application that consumes the communication service can continue without an expected message, and the survival time state can be the state where the terminal device is a device in the survival time. The duplication transmission can be a process in which the data packet corresponding to feedback information is repeatedly transmitted.

The timer can be monitored. If the timer does not reach the timing threshold and the terminal device is in the survival time state, the terminal device duplicates and transmits the data packet repeatedly at the MAC layer.

At operation 240, if the terminal device enters the survival time state before the timer exceeds the timing threshold, then the duplication transmission of the data packet at the MAC layer is performed.

When entering the survival time state, the terminal device can monitor the timer. If the time of the timer does not reach the timing threshold, the data packet that has a transmission failure is duplicated and sent at the MAC layer.

On the basis of the above embodiment(s), the second threshold time is configured by the base station.

In an embodiment of the present disclosure, the second threshold time at which the timer is started by the terminal device can be configured by the base station.

On the basis of the above embodiment(s), the second threshold time and/or the first threshold number are configured by the base station through a radio resource control (RRC) message, where the RRC message includes at least one of, an RRCReestablishment message, an RRCReconfiguration message, an RRCResume message, an RRCReject message, or an RRCSetup message.

The first threshold number or the second threshold time can be configured by the base station through an RRC message, where the RRC message can be at least one of, an RRCReestablishment message, an RRCReconfiguration message, an RRCResume message, an RRCReject message, or an RRCSetup message. It can be understood that when the base station configures the first threshold number and the second threshold time, the type of RRC message via which the first threshold number is configured may be identical to or may be different from the type of the RRC message via which the second threshold time is configured.

On the basis of the above embodiment(s), the operation in which the PDCP duplication transmission is performed according to the received feedback information for the data packet includes the following operation,
determining that (the terminal device) is in the survival time state based on a reception of the feedback information for the data packet; and performing the PDCP duplication transmission based on the survival time state.

In an embodiment of the present disclosure, a determination can be performed as to whether the terminal device is in the survival time state through the received feedback information for the same data packet, and the PDCP duplication transmission can be triggered according to the situation that the terminal device is in the survival time state. For example, the feedback information received by the terminal device is the retransmission schedule, and when the number of the received retransmission schedules for the data packet is greater than or equal to the first threshold number, it is determined that the terminal device enters the survival time state, and the terminal device can control the PDCP duplication transmission in the survival time state.

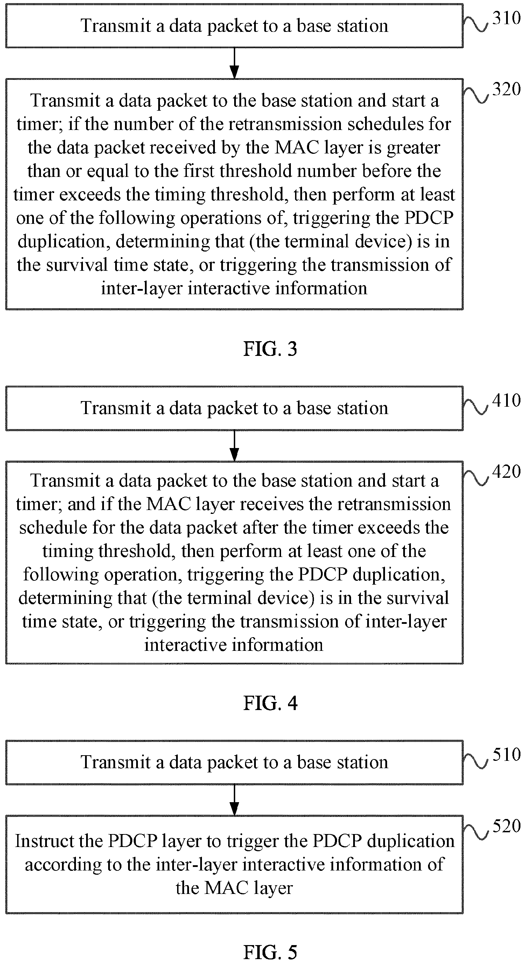

FIG. 3 depicts a flowchart showing a method for configuring information according to another embodiment of the present disclosure, which embodies the embodiment described above. Referring to FIG. 3, the method includes the following operations.

At operation 310, a data packet is transmitted to the base station.

At operation 320, a data packet is transmitted to the base station and a timer is started; if the number of the retransmission schedules for the data packet received by the MAC layer is greater than or equal to the first threshold number before the timer exceeds the timing threshold, then at least one of the following operation is performed, triggering the PDCP duplication transmission, determining that (the terminal device) is in the survival time state, or triggering the transmission of inter-layer interactive information.

In an embodiment of the present disclosure, the terminal device starts the timer while transmitting the data packet to the base station concurrently. If the number of retransmission schedules for the same data packet received by the terminal device at the media access control layer exceeds the first threshold number before the timer reaches the timing threshold, it is determined that the terminal device is in the survival time state, or the PDCP duplication transmission is triggered, or the transmission of inter-layer interactive information is triggered, or any combination of determining that the terminal device is in the survival time state, triggering the PDCP duplication transmission, and triggering the transmission of inter-layer interactive information.

FIG. 4 depicts a flowchart showing a method for configuring information according to another embodiment of the present disclosure, which embodies the embodiment described above. Referring to FIG. 4, the method includes the following operations.

At operation 410, a data packet is transmitted to the base station.

At operation 420, a data packet is transmitted to the base station and a timer is started; and if the MAC layer receives the retransmission schedule for the data packet after the timer exceeds the timing threshold, then at least one of the following operations is performed, triggering the PDCP duplication transmission, determining that (the terminal device) is in the survival time state, or triggering the transmission of inter-layer interactive information.

The terminal device starts the timer while transmitting the data packet to the base station. If the number of retransmission schedules for the same data packet received by the terminal device at the media access control layer exceeds the first threshold number even after the timer reaches the timing threshold, at least one of the following operations is performed, determining that the terminal device is in the survival time state, triggering the PDCP duplication transmission, or triggering the transmission of inter-layer interactive information, or any combination of determining that the terminal device is in the survival time state, triggering the PDCP duplication transmission and triggering the transmission of inter-layer interactive information.

FIG. 5 depicts a flowchart showing a method for configuring information according to another embodiment of the present disclosure, which embodies the embodiment described above. Referring to FIG. 5, the method includes the following operations.

At operation 510, a data packet is transmitted to the base station.

At operation 520, the PDCP layer is instructed to trigger the PDCP duplication transmission according to the inter-layer interactive information of the MAC layer.

In an embodiment of the present disclosure, the terminal device can send the inter-layer interactive information to the PDCP layer at the MAC layer, and the inter-layer interactive information is configured to instruct the PDCP layer to perform the PDCP duplication transmission.

On the basis of the above embodiment(s), the inter-layer interactive information includes at least one of the following,
an instruction for activating PDCP duplication transmission, an instruction for entering the survival time state, an indication that is indicative of a failure in transmission of the data packet, an indication that is indicative of a failure in transmission of a retransmission data packet of the current data packet, an instruction for duplicating and transmitting the current data packet, an instruction for retransmitting the current data packet, an instruction for triggering the PDCP duplication transmission for the current data packet, or an instruction for triggering the PDCP duplication transmission for a subsequent data packet.

The inter-layer interactive information sent by the MAC layer to the PDCP layer can be at least one of, an instruction for activating PDCP duplication transmission, an instruction for entering the survival time state, an indication that is indicative of a failure in transmission of the data packet, an indication that is indicative of a failure in transmission of a retransmission data packet of the current data packet, an instruction for duplicating and transmitting the current data packet, an instruction for retransmitting the current data packet, an instruction for triggering the PDCP duplication transmission for the current data packet, or an instruction for triggering the PDCP duplication transmission for a subsequent data packet.

On the basis of the above embodiment(s), performing the PDCP duplication transmission according to the received feedback information for the data packet includes,
performing at least one of the following operations in response to the number of the received feedback information of the data packet being greater than or equal to the first threshold number, triggering the PDCP duplication transmission, determining that (the terminal device) is in the survival time state, or triggering the transmission of the inter-layer interactive information.

In an embodiment of the present disclosure, when the number of feedback information received by the terminal device for the same data packet exceeds the first threshold, it can be determined that the terminal device enters the survival time state, or the terminal device performs the PDCP duplication transmission, or the transmission of inter-layer interactive information is triggered, or any combination of operations including, determining that the terminal device is in the survival time state, triggering the PDCP duplication transmission, and triggering the transmission of inter-layer interactive information, is performed.

On the basis of the above embodiment(s), performing the PDCP duplication transmission according to the received feedback information for the data packet includes,
in response to the number of the received feedback information of the data packet being less than the first threshold number and the time at which the feedback information is received exceeding or equaling the second threshold time, performing at least one of the following operations including, triggering the PDCP duplication transmission, determining that (the terminal device) is in the survival time state, or triggering the transmission of the inter-layer interactive information.

If the number of feedback information of the same data packet received by the terminal device does not exceed the first threshold number, and the time when the feedback information is received exceeds the second threshold time, then it is determined that the terminal device enters the survival time state, or the PDCP duplication transmission is performed by the terminal device, or any combination of the following operations is performed, the operations include determining that the terminal device is in the survival time state, triggering the PDCP duplication transmission, and triggering the transmission of inter-layer interactive information.

On the basis of the above embodiment(s), performing the PDCP duplication transmission according to the received feedback information for the data packet, includes, in response to the time when the feedback information for the data packet is received, being greater than or equal to the second threshold time, the at least one of the following operations is performed, the operations include, triggering the PDCP duplication transmission, determining that (the terminal device) is in the survival time state, and triggering the transmission of inter-layer interactive information.

On the basis of the above embodiment(s), if the time at which the terminal device receives the feedback information for the same data packet exceeds or equals the second threshold time, it is determined that the terminal device enters the survival time state, or the terminal device performs the PDCP duplication transmission, or the transmission of inter-layer interactive information is triggered, or any combination of the following operations is performed, the operations include, determining that the terminal device is in the survival time state, triggering the PDCP duplication transmission, and triggering the transmission of inter-layer interactive information.

On the basis of the above embodiment(s), performing the PDCP duplication transmission according to the received feedback information for the data packet, includes, in response to the time when the feedback information for the data packet is received being less than the second threshold time and the number of the received feedback information for the data packet being greater than or equal to the first threshold number, at least one of the following operations is performed, the operations include, triggering the PDCP duplication transmission, determining that (the terminal device) is in the survival time state, and triggering the transmission of inter-layer interactive information.

When the respective time when the terminal device receives each feedback information for the same data packet is less than the second threshold time, and the number of the feedback information for the data packet received by the terminal device exceeds the first threshold number, then it is determined that the terminal device enters the survival time state, or PDCP duplication transmission is performed by the terminal device, or the transmission of the inter-layer interactive information is triggered, or any combination of the following operations is performed, the operations include determining that the terminal device is in the survival time state, triggering the PDCP duplication transmission, and triggering the transmission of the inter-layer interactive information.

On the basis of the above embodiment(s), the time when the feedback information is received includes at least one of,
The time when the feedback information is received; or the physical resource time when the feedback information is transmitted; or the time when the feedback information is detected; or the time interval between the time when the feedback information is received and the time when the data packet is initially sent; or the time interval between the time when the feedback information is detected and the time when the data packet is initially sent.

On the basis of the above embodiment(s), triggering the PDCP duplication transmission or determining that (the terminal device) is in the survival time state includes,
controlling the MAC layer to send, an instruction for activating the PDCP duplication transmission for the retransmission of the current data packet, to the PDCP layer.

In an embodiment of the present disclosure, the terminal device can control the media access control layer to send the instruction for activating the PDCP duplication transmission, and the instruction can be configured to activate the retransmission of the current data packet.

On the basis of the above embodiment(s), triggering the PDCP duplication transmission or determining that (the terminal device) is in the survival time state includes,
controlling the MAC layer to send, an instruction for activating the PDCP duplication transmission for the retransmission of a subsequent data packet, to the PDCP layer.

In an embodiment of the present disclosure, the terminal device can control the media access control layer to send the instruction for activating the PDCP duplication transmission, and the instruction can be configured to activate the retransmission of a subsequent data packet.

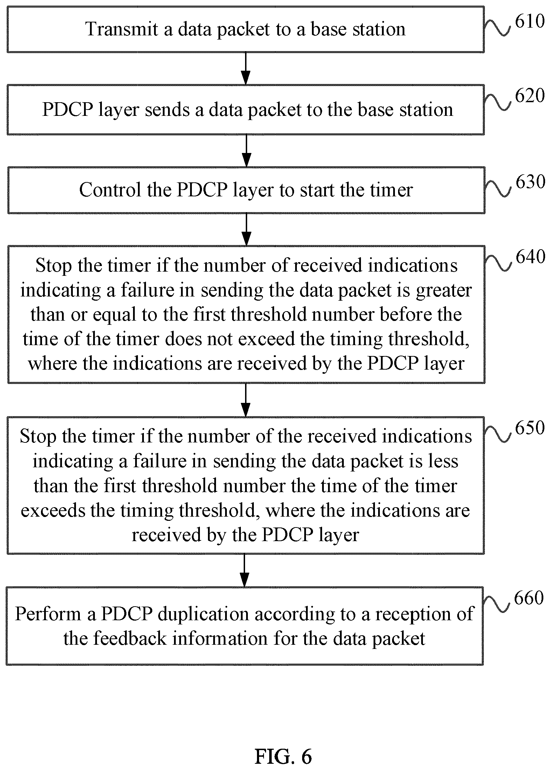

FIG. 6 depicts a flowchart showing a method for configuring information according to another embodiment of the present disclosure, which embodies the embodiment described above. Referring to FIG. 6, the method includes the following operations.

At operation 610, a data packet is transmitted to the base station.

At operation 620, the PDCP layer sends a data packet to the base station.

The terminal device sends the data packet to the base station through the PDCP layer.

At operation 630, the PDCP layer is controlled to start the timer.

In an embodiment of the present disclosure, the terminal device can start the timer while sending the data packet, and the timer can be started by the PDCP layer of the terminal device.

At operation 640, in response to the number of received indications indicating a failure in sending the data packet being greater than or equal to the first threshold number before the time of the timer does not exceed the timing threshold, then the timer is stopped, where the indications are received by the PDCP layer.

The indications indicating a failure in sending the data packet may be feedback information received by the PDCP layer, and the feedback information may be generated when the base station fails to receive the data packet.

In an embodiment of the present disclosure, when the time of the timer does not reach the time corresponding to the timing threshold, and if the number of indications indicating a failure in sending the same data packet received by the terminal device at the PDCP layer is greater than or equal to the first threshold number, the timer can be controlled to stop.

At operation 650, in response to the number of the received indications indicating a failure in sending the data packet being less than the first threshold number and the time of the timer exceeding the timing threshold, then the timer is stopped, where the indications are received by the PDCP layer.

When the time of the timer reaches the time corresponding to the timing threshold, and if the number of retransmission schedules for the data packet received by the terminal device at the PDCP layer is less than the first threshold number, then the timer can be controlled to stop.

At operation 660, a packet data convergence protocol (PDCP) duplication transmission is performed according to a reception of the feedback information for the data packet.

On the basis of the above embodiment(s), performing the PDCP duplication transmission according to the received feedback information for the data packet includes,
triggering the PDCP duplication transmission of the current data packet before the time of the timer exceeds the timing threshold, and if the PDCP layer receives the inter-layer interactive information transmitted by the MAC layer.

The PDCP layer of the terminal device receives the inter-layer interactive information transmitted by the MAC layer, and the time when the inter-layer interactive information is received is before the time of the timer reaches the timing threshold, then the PDCP duplication transmission is executed according to the current data packet.

On the basis of the above embodiment(s), performing the PDCP duplication transmission according to the received feedback information for the data packet includes,
triggering the PDCP duplication transmission of a subsequent data packet after the time of the timer exceeds the timing threshold, and if the PDCP layer receives the inter-layer interactive information transmitted by the MAC layer.

In an embodiment of the present disclosure, after the time of the timer exceeds the timing threshold, and if the terminal device receives at the PDCP layer, the inter-layer interactive information transmitted by the MAC layer, then the PDCP duplication transmission is performed according to a subsequent data packet.

On the basis of the above embodiment(s), the inter-layer interactive information indicated by the MAC layer includes at least one of the following,
an indication that is indicative of a failure in transmission of the data packet, an indication that is indicative of a failure in transmission of a retransmission data packet of the current data packet, an instruction for duplicating and transmitting the current data packet, an instruction for retransmitting the current data packet, an instruction for retransmitting a subsequent data packet, an instruction for activating the PDCP duplication transmission, or an instruction for entering the survival time state.

On the basis of the above embodiment(s), the method further includes, starting a timer in response to a transmission of a data packet to the base station, which includes, sending a data packet to the base station by the radio link layer control protocol layer; and controlling the radio link layer control protocol layer to start a timer.

The data packet is sent to the base station at the radio link layer control protocol layer, and the timer is started at the radio link layer control protocol layer at the same time when the data packet is sent.

On the basis of the above embodiment(s), controlling the radio link layer control protocol layer to start the timer includes,
controlling the radio link layer control protocol layer to start the timer according to the second threshold time.

The terminal device can start the timer at the radio link layer control protocol layer and set the timing threshold of the timer as the second threshold time.

On the basis of the above embodiment(s), the operation in which the PDCP duplication transmission according to the reception of the feedback information for the data packet includes the following operations,
preventing the duplication transmission of the data packet at the radio link layer control protocol layer, when the terminal device enters the survival time state after the timer reaches the timing threshold; and performing the duplication transmission of the data packet at the radio link layer control protocol layer, when the terminal device enters the survival time state before the timer exceeds the timing threshold.

In an embodiment of the present disclosure, when the terminal device enters the survival time state after the timer reaches the timing threshold, then the duplication transmission for the data packet at the radio link layer control protocol layer is prevented; and when the terminal device enters the survival time state before the timer reaches the timing threshold, the duplication transmission for the data packet is performed at the radio link layer control protocol layer.

On the basis of the above embodiment(s), the feedback information includes retransmission schedule information, or, NACK information, or dedicated feedback information that triggers the survival time state.

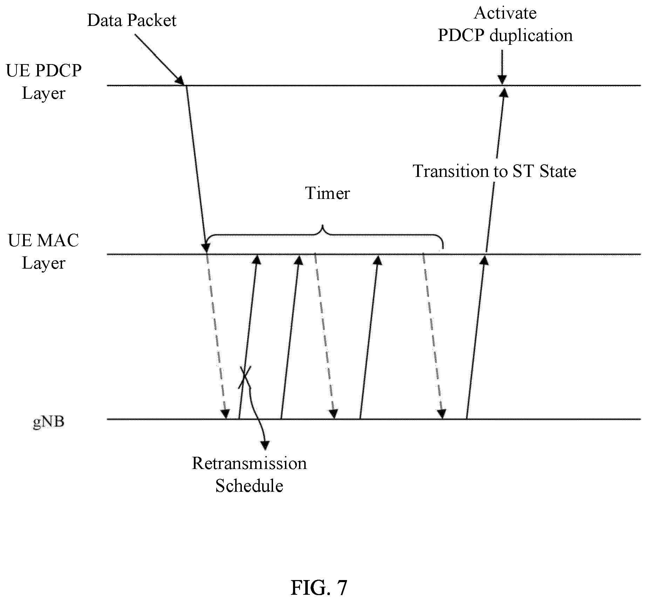

In an embodiment, a timer is introduced in the MAC layer to determine whether the terminal device enters the survival time (ST) state and the PDCP duplication transmission is activated. FIG. 7 depicts a schematic diagram showing the method for configuring information according to an embodiment of the present disclosure. As shown in FIG. 7, when the UE transmits a data packet to the base station (gNB) in a deterministic communication, the HARQ NACK scheme is employed to determine whether the UE enters the survival time state. Shown in the figure is an example where the first threshold number N=4, and a timer is introduced in the MAC layer. The value of the timer is the second threshold time that is a time threshold configured by the base station for the terminal device. The method is applied to deterministic communication including the following operations.

When the MAC layer of the UE sends a data packet, the timer is started, in other words, the timer is started every time the MAC layer sends a data packet.

The timer is stopped, under at least one of the following conditions including: when the MAC layer of the UE receives N retransmission schedules for the same data packet and the timer does not exceed the threshold configured by the base station, the timer is stopped; or before the timer exceeds the threshold configured by the base station, if the number of retransmission schedules for the same data packet received by the MAC layer of the UE is less than N, then the timer will be stopped when the timer reaches the time threshold. The above-mentioned time threshold is the second threshold time that is configured by the base station through an RRC message. The RRC message at least includes one of, an RRCReestablishment message, an RRCReconfiguration message, an RRCResume message, an RRCReject message, or an RRCSetup message.

The method for determining whether the terminal device enters the ST state by introducing a timer based on the HARQ NACK scheme is as follows.

### Method #1:

When the MAC layer of the UE receives N retransmission schedules for the same data packet and the timer does not exceed the threshold configured by the base station, the UE enters the ST state when the UE receives the last retransmission schedule.

If the MAC layer of the UE receives less than N retransmission schedules for the same data packet when the timer exceeds the threshold, then the UE is prevented from entering the ST state.

After the timer exceeds the time threshold, if the MAC layer of the UE receives another retransmission schedule information for the same data packet, then the UE enters the ST state.

When the MAC layer enters the ST state, the MAC layer instructs the PDCP layer to activate PDCP duplication transmission through the inter-layer interactive information. In particular, the inter-layer interactive information at least includes one of, an instruction instructing the PDCP layer to activate PDCP duplication transmission, or an instruction instructing the PDCP layer to enter the ST state, or an indication indicating a failure in transmission of a data packet in the PDCP layer, or an indication indicating a failure in transmission retransmission data packet for the current data packet, or an instruction instructing the PDCP layer to duplicate and send the current data packet.

### Method #2:

When the number of retransmission schedules for the same data packet received by the UE is greater than or equal to the first threshold number, the UE enters the ST state.

When the number of retransmission schedules for the same data packet received by the UE is less than the first threshold number, and the time when the UE receives a retransmission schedule for the data packet is greater than or equal to the second threshold time, the UE enters the ST state.

The time when the retransmission schedule is received includes, the interval between the time when the UE receives the retransmission schedule and the time when the data packet is initially sent, or the interval between the time when the UE detects the retransmission schedule and the time when the data packet is initially sent.

When the UE enters the ST state, the MAC layer sends an instruction to the PDCP layer for activating the PDCP duplication transmission; or the MAC layer sends an indication to the PDCP layer indicating the entrance of the ST state; or the MAC layer sends an instruction to the PDCP layer for activating the PDCP duplication transmission for the current retransmission data packet; or the MAC layer sends an instruction to the PDCP layer for activating the PDCP duplication transmission for a subsequent data packet.

### Method #3:

If the time at which the UE receives the retransmission schedule for the data packet is greater than or equal to the second threshold time, then the UE enters the ST state.

If the time at which the UE receives the retransmission schedule for the data packet is less than the second threshold time, and the number of retransmission schedules for the same data packet received by the UE is greater than or equal to the first threshold number, then the UE enters the ST state.

The time when the retransmission schedule is received includes, the interval between the time when the UE receives the retransmission schedule and the time when the data packet is initially sent, or the interval between the time when the UE detects the retransmission schedule and the time when the data packet is initially sent.

When the UE enters the ST state, the MAC layer sends an instruction to activate the PDCP duplication transmission to the PDCP layer, or the MAC layer sends an indication that indicates the entrance of the ST state to the PDCP layer.

### Method #4:

When the time at which the UE receives the retransmission schedule for the data packet is greater than or equal to the second threshold time, or when the number of the retransmission schedules for the same data packet received by the UE is greater than or equal to the first threshold number, the UE enters the ST state.

The time when the retransmission schedule is received includes, the interval between the time when the UE receives the retransmission schedule and the time when the data packet is initially sent, or the interval between the time when the UE detects the retransmission schedule and the time when the data packet is initially sent.

When the UE enters the ST state, the MAC layer sends an instruction to activate the PDCP duplication transmission to the PDCP layer, or the MAC layer sends an indication that indicates the entrance of the ST state to the PDCP layer,

### Method #5:

If the time at which the UE receives the retransmission schedule for the data packet is less than the second threshold time, and the number of the retransmission schedules for the same data packet received by the UE is greater than or equal to the first threshold number, then the MAC layer sends an instruction to activate the current retransmission data packet for PDCP duplication transmission to the PDCP layer.

If the time at which the UE receives the retransmission schedule for the data packet is greater than or equal to the second threshold time, then the MAC layer sends an instruction to activate the PDCP duplication transmission for a subsequent data packet to the PDCP layer.

The first threshold number and the second threshold time are configured by the base station through an RRC message. The RRC message at least includes one of, an RRCReestablishment message, an RRCReconfiguration message, an RRCResume message, an RRCReject message, or an RRCSetup message.

In the above method, if the UE has activated the PDCP duplication transmission before entering the ST state, that is, the same data packet is sent via a plurality of branch paths, in such a case, a determination is performed on each path by means of the above method. Since the same data packet is transmitted via a plurality of branch paths, and thus, as long as the transmission via one of the paths succeeds, it is not necessary to trigger the entrance of the ST state, so it is necessary to make statistics and determination on the state of packet transmission on each branch path. The above statistics and determination may occur at the MAC layer or the PDCP layer. For the MAC layer, since the branch path for duplication and the main path are different Radio Link Control (RLC) entities and the corresponding HARQ processes are in different HARQ entities, it is necessary that the state in which the current data packet is sent in the HARQ process corresponding to the main path can go across the HARQ entity to cooperate with the state in which the current data packet is sent over the HARQ process corresponding to the branch path. In the PDCP layer, since the branch path for duplication and the main path correspond to the same PDCP entity in the PDCP layer, each packet sending path sends its own packet to the PDCP layer through the inter-layer interactive information, then the determination is performed by the PDCP layer. The inter-layer interactive information at least includes one of, an indication indicating a success in the transmission of the current data packet, an indication indicating a failure in the transmission of the current data packet, or an indication indicating the entrance of the ST state or indicating a failure in the transmission of the data packet in this path. One scheme of the above statistics and determination includes one of the following: UE is prevented from entering the ST state if the transmission on at least one path succeeds, or the UE enters the ST state if the transmission on each path fails.

Before the UE enters the ST state, the base station configures a dedicated PDCP duplication transmission resource for the UE. The dedicated PDCP resource enables the activation or deactivation of the PDCP duplication transmission either by the UE itself or by a predefined MAC CE of the base station. In the case that the UE has activated the PDCP duplication transmission before entering the ST state, and if the number of paths where the PDCP duplication transmission is activated is less than the number of the PDCP duplication transmission paths dedicated to ST, then the behavior after the UE enters the ST state includes at least one of the following: maintaining the original paths where PDCP duplication transmission is activated and increasing the number of the PDCP duplication transmission paths dedicated to ST; or deactivating an original path where the PDCP duplication transmission is activated, and activating a PDCP duplication transmission path dedicated to ST; or deactivating a path having a resource inconsistent with the PDCP duplication transmission resource dedicated to ST from the original paths where PDCP duplication transmission is activated and activating another PDCP duplication transmission path dedicated to ST. If the number of paths where the PDCP duplication transmission is activated is greater than or equal to the number of the PDCP duplication transmission paths dedicated to ST, then the behavior after the UE enters the ST state includes at least one of, maintaining the original paths where PDCP duplication transmission is activated; or deactivating an original path where the PDCP duplication transmission is activated, and activating a PDCP duplication transmission path dedicated to ST; or deactivating a path having a resource inconsistent with the PDCP duplication transmission resource dedicated to ST from the original paths where PDCP duplication transmission is activated and activating another PDCP duplication transmission path dedicated to ST, or deactivating a path having a resource inconsistent with the PDCP duplication transmission resource dedicated to ST from the original paths where PDCP duplication transmission is activated. It is necessary to always keep at most four paths for data packet transmission among the paths where the PDCP duplication transmission is activated, as discussed above. After entering the ST state, it is necessary to exit the ST state and indicate the deactivation of PDCP duplication transmission due to the success in the transmission of the data packet. The MAC layer identifies whether the transmission of the data packet is successful based on the above method, and employs the inter-layer interactive information to indicate the success in the transmission of the data packet or the deactivation of PDCP duplication transmission to the PDCP layer after the data packet is sent successfully. The inter-layer interactive information at least includes one of, an indication indicating a success in the transmission of the current data packet, or an indication indicating the exit of the ST state, or an indication indicating the deactivation of the PDCP duplication transmission, or an indication indicating a success in the transmission of the data packet in this path. The PDCP layer, after receiving the information, deactivates the PDCP duplication transmission autonomously.

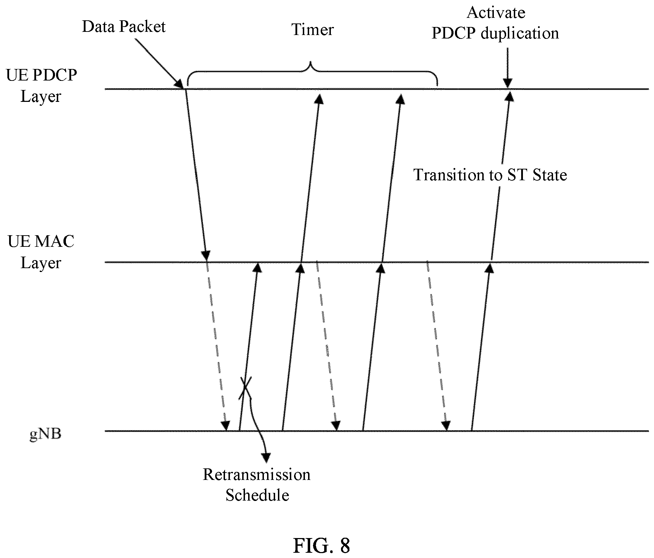

In an embodiment, a timer is introduced in the PDCP layer to determine whether the UE enters the ST state and whether the PDCP duplication transmission is activated. FIG. 8 depicts a schematic diagram showing another method for configuring information according to an embodiment of the present disclosure. As shown in FIG. 8, when the UE transmits a data packet to the gNB in a deterministic communication, the HARQ NACK scheme is employed to determine whether the UE enters the ST state. Shown in the figure is an example where the first threshold number N=4, and a timer is introduced in the PDCP layer. The value of the timer is a time threshold configured by the base station for the terminal device, which is denoted as the second threshold time. The method is applied to deterministic communication including the following operations.

When the PDCP layer of the UE sends a data packet, the timer is started, in other words, the timer is started every time the PDCP layer sends a data packet.

After the MAC layer of the UE receives each retransmission schedule information, the MAC layer indicates the PDCP layer through inter-layer interactive information that indication information indicating a failure in the transmission of a data packet is received.

For the case where the timer is stopped, at least one of the following is included: when the PDCP layer of the UE receives N indications indicating a failure in the transmission for the same data packet and the timer does not exceed the threshold configured by the base station, the timer is stopped; or before the timer exceeds the threshold configured by the base station, and when the number of indications indicating the failure in the transmission of the same data packet received by the PDCP layer of the UE is less than N, then the timer is stopped when the timer reaches the time threshold. The above-mentioned time threshold is configured by the base station through an RRC message. The RRC message at least includes one of, an RRCReestablishment message, an RRCReconfiguration message, an RRCResume message, an RRCReject message, or an RRCSetup message.

The method for determining whether the terminal device enters the ST state by introducing a timer based on the HARQ NACK scheme is as follows.

When the PDCP layer of the UE receives N indications indicating the failure in transmission of the same data packet and the timer does not exceed the second threshold configured by the base station, the UE enters the ST state when the UE receives the last retransmission schedule.

If the PDCP layer of the UE receives less than N indications indicating the failure in the transmission of the same data packet when the timer exceeds the time threshold, then the UE is prevented from entering the ST state.

After the timer exceeds the time threshold, if the PDCP layer of the UE receives another indication indicating the failure in transmission of the same data packet, then the UE enters the ST state.

When the data packet is retransmitted (HARQ) at the MAC layer, in a HARQ process corresponding to RLC, if the sending end receives a ACK feedback after sending the data packet, the sending end clears the current data packet and sends a subsequent data packet; on the other hand, if a NACK feedback is received, the current data packet is retransmitted. However, in the uplink transmission, no explicit ACK/NACK feedback is present in the HARQ process in NR, and the failure in the transmission of a data packet is only implicitly fed back by the retransmission schedule information. When entering the ST state and activating PDCP duplication transmission based on the HARQ NACK method or the method of the above embodiment(s), the duplication transmission for data packet when PDCP duplication transmission is activated can have the following two types. One is to perform the duplication transmission of the data packet of a subsequent cycle in the cyclic service. The second is to retransmit and duplicate the data packets of the current cycle in the cyclic service.

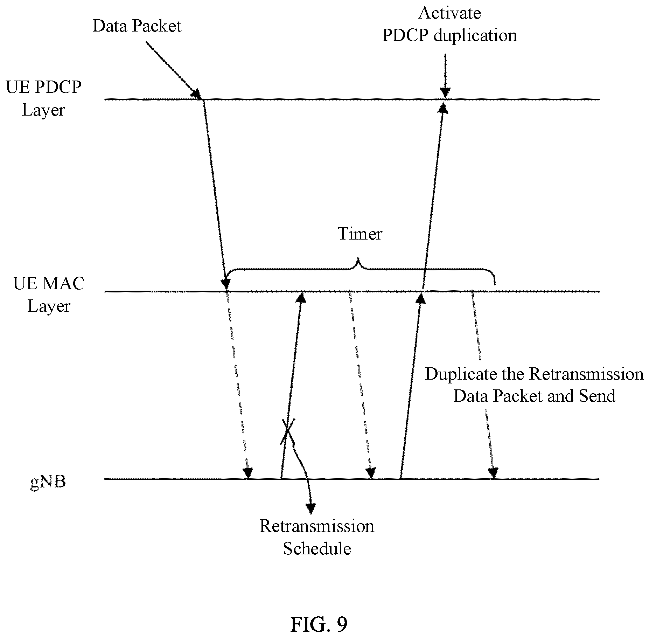

In an embodiment, a timer is introduced to determine whether to duplicate and send the retransmission data packet when entering the ST state, as shown in FIG. 9. When considering providing a timer to determine whether to duplicate the retransmission data packet, the timer and the duplication should be in the same layer to reduce signaling interaction. Hence, the timer can be introduced to the PDCP layer, the RLC layer, or the MAC layer. The above-mentioned value of the timer is configured by the base station through an RRC message. The RRC message at least includes one of, an RRCReestablishment message, an RRCReconfiguration message, an RRCResume message, an RRCReject message, or an RRCSetup message. The location where the duplication occurs can include the following cases.

The duplication occurs at the MAC layer.

As shown in FIG. 9, when the duplication transmission occurs at the MAC layer, the timer is also provided at the MAC layer. The timer is started when the UE sends a data packet in the MAC layer. In other words, the timer is started every time the MAC layer sends a data packet. If the terminal device enters the ST state after the timer exceeds the time threshold, the duplication transmission of the retransmission data packet is not necessary. On the other hand, when the timer does not exceed the time threshold and the UE enters the ST state, the duplication transmission of the retransmission data packet is required. Since the branch path for duplication and the main path are different radio link layer control protocol entities and the corresponding HARQ processes are in different HARQ entities, it is necessary that the current data packet in the HARQ process corresponding to the main path can go across the HARQ entity to the HARQ process corresponding to the branch path, such that, the current data packet can be transmitted.

The duplication occurs at the RLC layer.

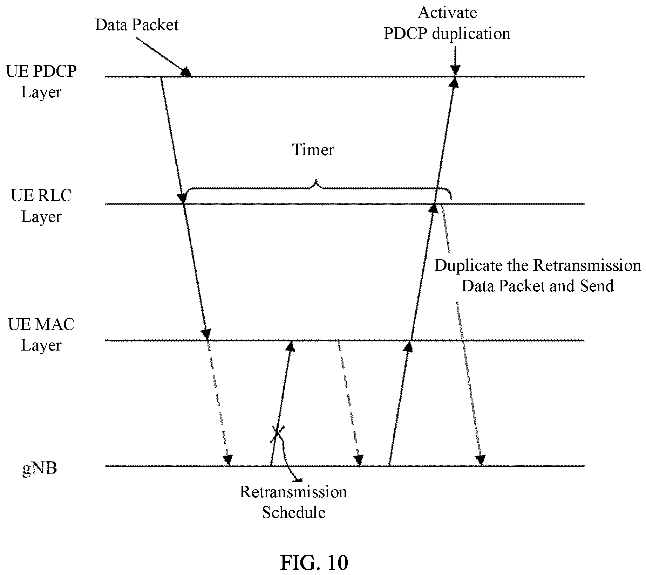

As shown in FIG. 10, when the duplication transmission occurs at the RLC layer, the timer is also provided at the RLC layer. The timer is started when the UE sends a data packet in the RLC layer. In other words, the timer is started every time the RLC layer sends a data packet. If the terminal device enters the ST state after the timer exceeds the time threshold, the duplication transmission of the retransmission data packet is not necessary. On the other hand, when the timer does not exceed the time threshold and the UE enters the ST state, the duplication transmission of the retransmission data packet is required. Since the RLC has a cache function, the data packet interaction between different RLCs is not enabled currently. In the case that the PDCP duplication transmission is activated, since the RLC of the branch path has no cache of the current data packet (that is, for the RLC of the branch path, the retransmission data packet is the initial transmission packet), the RLC entity of the main path needs to send the cached current data packet to the RLC entity of the branch path for transmission.

The duplication occurs at the PDCP layer.

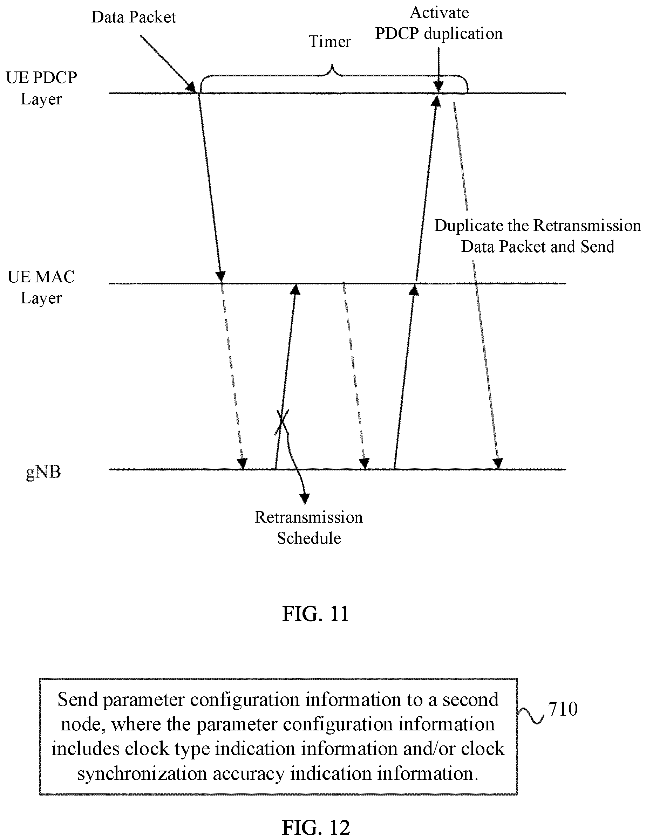

As shown in FIG. 11, when the duplication transmission occurs at the PDCP layer, the timer is also provided at the PDCP layer. The timer is started when the UE sends a data packet in the PDCP layer. In other words, the timer is started every time the PDCP layer sends a data packet. If the terminal device enters the ST state after the timer exceeds the time threshold, the duplication transmission of the retransmission data packet is not necessary. On the other hand, when the timer does not exceed the time threshold and the UE enters the ST state, the duplication transmission of the retransmission data packet is required.

Since in a cyclic service, when the current PDCP duplication transmission is activated for the data packet on the next cycle for duplication transmission, therefore, after receiving the information from the MAC layer indicating the activation of PDCP duplication transmission, the PDCP layer needs to repeatedly duplicate and send the data packet in the current cycle after the UE activates PDCP duplication transmission autonomously.

FIG. 12 depicts a flowchart showing a method for configuring information according to an embodiment of the present disclosure. This embodiment can be applied to the case of data retransmission by a terminal device. The method can be implemented by software and/or hardware, and is typically applied to a first node. The first node can be a base station, or a base station distributed unit. As shown in FIG. 12, the method includes the following operations.

At operation 710, parameter configuration information is sent to a second node, where the parameter configuration information includes clock type indication information and/or clock synchronization accuracy indication information.

At least one indication of the clock type indication, or the clock synchronization accuracy indication, can be sent to the second node through the parameter configuration information.

On the basis of the above embodiment(s), the parameter configuration information includes a handover request message or a clock synchronization request.

On the basis of the above embodiment(s), the clock synchronization request includes, a reference time information report control message, a reset message, a failure indication message, a base station-central unit configuration update message, a base station-distributed unit resource coordination request message, a paging message, and a system information delivery command message.

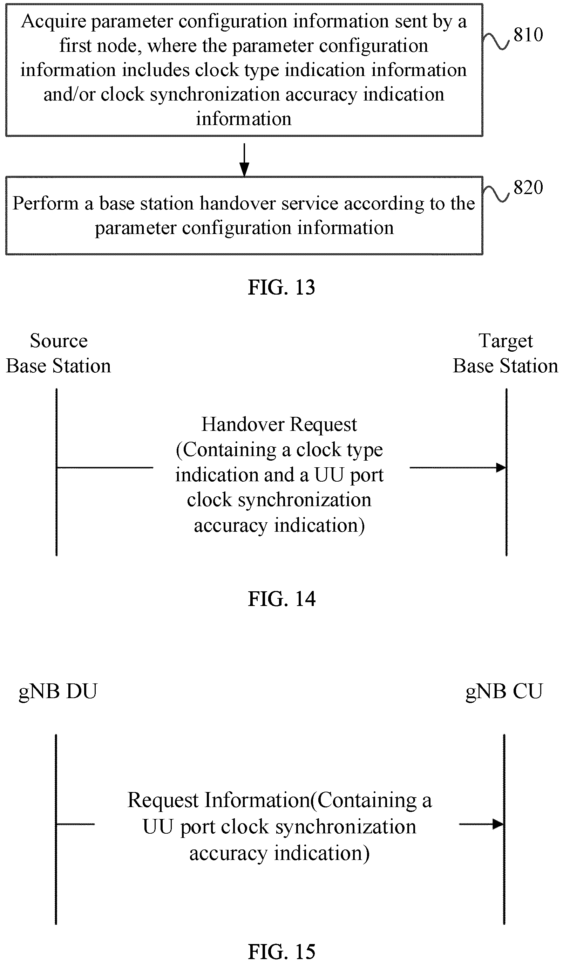

FIG. 13 depicts a flowchart showing another method for configuring information according to an embodiment of the present disclosure. This embodiment can be applied to the case of data retransmission by a terminal device. The method can be implemented by software and/or hardware, and is typically applied to a second node. The second node can be a base station, or a base station center unit. As shown in FIG. 13, the method includes the following operations.

At operation 810, parameter configuration information sent by a first node is acquired, where the parameter configuration information includes clock type indication information and/or clock synchronization accuracy indication information.

In an embodiment of the present disclosure, the second node receives the clock type indication information and/or the clock synchronization accuracy indication information sent by the first node through the parameter configuration information.

At operation 820, a base station handover service is performed according to the parameter configuration information.

The second node can employ the parameter configuration to perform the base station handover service to realize the handover from the source base station to the target base station.

On the basis of the above embodiment(s), the parameter configuration information includes a handover request message or a clock synchronization request.

On the basis of the above embodiment(s), the clock synchronization request includes, a reference time information report control message, a reset message, a failure indication message, a base station-central unit configuration update message, a base station-distributed unit resource coordination request message, a paging message. And a system information delivery command message.

In an embodiment, in a time-sensitive communication (TSC), the base station needs to obtain the clock type indication of the current service and the uu port clock synchronization accuracy indication from the core network through the Ng port. Then in the handover scenario, during the inter-base station handover based on the Xn port, the source base station sends a handover request message (HANDOVER REQUEST) that at least includes the clock type indication and the uu port clock synchronization accuracy indication to the target base station, in order to promptly and accurately obtain the information about the clock type indication and the uu port clock synchronization accuracy indication of the current service. As shown in FIG. 14, the source base station sends a handover request that includes a clock type indication and a UU port clock synchronization accuracy indication to the target base station. In addition, in the case that gNB is divided into a central unit (gNB-CU) and a distributed unit (gNB-DU) of the base station, gNB-CU requests information about the transmitted clock synchronization from gNB-DU through the F1 port for the clock synchronization scenario. The transmission is shown in FIG. 15, in which, the base station distributed unit sends request information including UU port clock synchronization accuracy indication to the base station central unit. A gNB base station includes a central unit (gNB-CU) and a distributed unit (gNB-DU). In the mobile communication scenario, the gNB-CU needs to request UU port clock synchronization accuracy indication information from the gNB-DU by requesting information related to clock synchronization. The request information at least includes one of the messages of, REFERENCE TIME INFORMATION REPORTING CONTROL, or RESET, or ERROR INDICATION, or GNB-CU CONFIGURATION UPDATE, or GNB-DU RESOURCE COORDINATION REQUEST, or PAGING, or SYSTEM INFORMATION DELIVERY COMMAND.

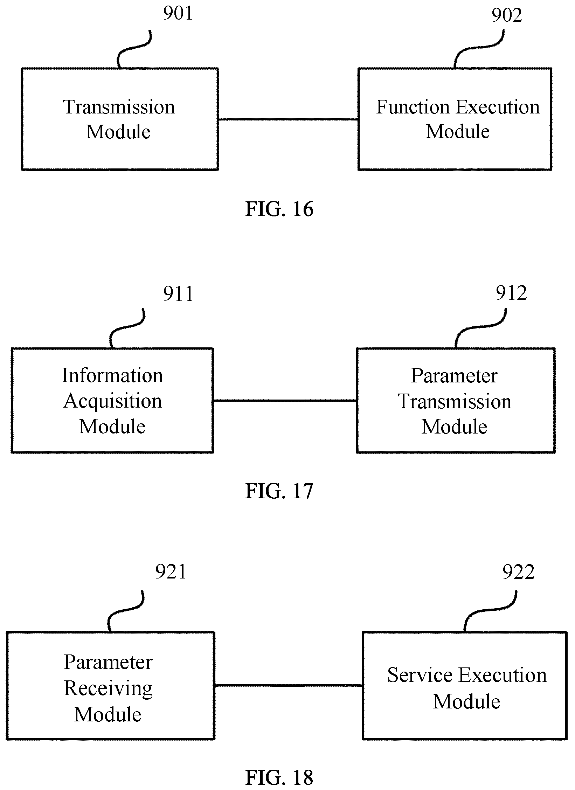

FIG. 16 depicts a schematic diagram showing a device for configuring information according to an embodiment of the present disclosure, which can perform the method for configuring information according to an embodiment of the present disclosure, which has corresponding functional modules and beneficial effects corresponding to the method. The device can be implemented as software and/or hardware, and includes a transmission module 901 and a function execution module 902.

The transmission module 901, is configured to transmit a data packet to a base station.

The function execution module 902, is configured to perform a packet data convergence protocol (PDCP) duplication transmission according to a reception of the feedback information for the data packet.

According to an embodiment of the present disclosure, the data packet is sent by the transmission module to the base station, and the PDCP duplication transmission is performed by the function execution module according to the feedback information corresponding to the data packet, so that the hybrid automatic repeat transmission is realized, the accuracy of data packet transmission is improved, and the communication quality can be enhanced.

On the basis of the above embodiment(s), the device further includes a time starting module, which is configured to start a timer in response to a transmission of the data packet to the base station.

On the basis of the above embodiment(s), the device further includes a timer stopping module, which is configured to stop the timer in response to the number of retransmission schedules of the data packet received by the media access control (MAC) layer being greater than or equal to the first threshold number before the timer does not exceed the timing threshold.

On the basis of the above embodiment(s), the timer stopping module is further configured to stop the timer in response to the number of retransmission schedules of data packets received by the media access control layer being less than the first threshold number when the timer exceeds the timing threshold.

On the basis of the above embodiment(s), the first threshold number in the device is configured by the base station.

On the basis of the above embodiment(s), the time starting module in the device is configured to send a data packet to the base station at the MAC layer; and to control the MAC layer to start the timer according to a second threshold time.

On the basis of the above embodiment(s), the second threshold time in the device is configured by the base station.

On the basis of the above embodiment(s), the second threshold time and/or the first threshold number in the device are configured by the base station through a radio resource control (RRC) message, where the RRC message includes at least one of, an RRCReestablishment message, an RRCReconfiguration message, an RRCResume message, an RRCReject message, or an RRCSetup message.

On the basis of the above embodiment (s), the function execution module 902 is configured to, prevent the duplication transmission of the data packet at the MAC layer when the terminal device enters the survival time state after the timer exceeds the timing threshold; and to duplicate the transmission of the data packet at the MAC layer when the terminal device enters the survival time state before the timer exceeds the timing threshold.

On the basis of the above embodiment(s), the function execution module 902 is further configured to, determine that (the terminal device) is in the survival time state according to a reception of the feedback information for the data packet; and to perform a PDCP duplication transmission according to the survival time state.

On the basis of the above embodiment(s), the function execution module 902 is further configured to transmit a data packet to a base station and start a timer; and to perform at least one of operations of, triggering the PDCP duplication transmission, determining that (the terminal device) is in the survival time state, or triggering the transmission of inter-layer interactive information, when the number of retransmission schedules for the data packet is greater than or equal to the first threshold number before the timer exceeds the timing threshold, where the retransmission schedules are received by the MAC layer.

On the basis of the above embodiment(s), the function execution module 902 is further configured to transmit a data packet to the base station and start the timer; and to perform at least one of operations of, triggering the PDCP duplication transmission, determining that (the terminal device) is in the survival time state, or triggering the transmission of inter-layer interactive information, when the MAC layer receives a retransmission schedule of the data packet after the timer exceeds the timing threshold.

On the basis of the above embodiment (s), the function execution module 902 is configured to instruct the PDCP layer to trigger the PDCP duplication transmission according to the inter-layer interactive information from the MAC layer.

On the basis of the above embodiment, the inter-layer interactive information includes at least one of the following,
an instruction for activating PDCP duplication transmission, an instruction for entering the survival time state, an indication that is indicative of a failure in transmission of the data packet, an indication that is indicative of a failure in transmission of a retransmission data packet of the current data packet, an instruction for duplicating and transmitting the current data packet, an instruction for retransmitting the current data packet, an instruction for triggering the PDCP duplication transmission for the current data packet, or an instruction for triggering the PDCP duplication transmission for a subsequent data packet.

On the basis of the above embodiment(s), the function execution module 902 is configured to perform at least one operation of, triggering the PDCP duplication transmission, determining (the terminal device) is in the survival time state, or triggering the transmission of inter-layer interactive information, in response to the number of the received feedback information for the data packet being greater than or equal to the first threshold number.

On the basis of the above embodiment(s), the function execution module 902 is configured to perform at least one operation of, triggering the PDCP duplication transmission, determining (the terminal device) is in the survival time state, or triggering the transmission of inter-layer interactive information, in response to the number of the received feedback information for the data packet being less than the first threshold number, and the time at which the received feedback information is received being greater than or equal to the second threshold time.

On the basis of the above embodiment (s), the function execution module 902 is configured to perform at least one operation of, triggering the PDCP duplication transmission, determining (the terminal device) is in the survival time state, or triggering the transmission of inter-layer interactive information, in response to the time when the feedback information for the data packet is received, being greater than or equal to the second threshold time.

On the basis of the above embodiment (s), the function execution module 902 is configured to perform at least one of operations of, triggering the PDCP duplication transmission, determining that the terminal device is in an ST state, or triggering a transmission of inter-layer interactive information, in response to a number of received feedback information for the data packet being greater than or equal to a first threshold number and a time at which one of the received feedback information is received being less than a second threshold time.

On the basis of the above embodiment, the time when the feedback information is received includes at least one of,
the time when the feedback information is received; or
the physical resource time when the feedback information is transmitted; or
the time when the feedback information is detected; or
the time interval between the time when the feedback information is received and the time when the data packet is initially sent; or
the time interval between the time when the feedback information is detected and the time when the data packet is initially sent.

On the basis of the above embodiment(s), the function execution module 902 is configured to control the MAC layer to send an instruction for activating the PDCP duplication transmission for the retransmission of the current data packet, to the PDCP layer.

On the basis of the above embodiment(s), the function execution module 902 is configured to control the MAC layer to send an instruction for activating the PDCP duplication transmission for the retransmission of a subsequent data packet, to the PDCP layer.

On the basis of the above embodiment(s), the device includes a time starting module, which is configured to send the data packet by the PDCP layer to the base station; and to control the PDCP layer to start the timer.

On the basis of the above embodiment(s), the device includes a time stopping module, which is configured to stop the timer when the number of the received indications indicating a failure in transmission of the data packet is greater than or equal to the first threshold number, before the timer does not exceed the timing threshold, where the indications are received by the PDCP layer.

On the basis of the above embodiment(s), the device includes a time stopping module, which is configured to stop the timer when the timer exceeds the timing threshold and the number of the received indications indicating a failure in transmission of the data packet is less than the first threshold number, where the indications are received by the PDCP layer.

On the basis of the above embodiment(s), the function execution module 902 is further configured to trigger the PDCP duplication transmission for the current data packet when the PDCP layer receives an inter-layer interactive information transmitted by the MAC layer before the timer exceeds the timing threshold.

On the basis of the above embodiment(s), the function execution module 902 is further configured to trigger the PDCP duplication transmission for a subsequent data packet when the PDCP layer receives an inter-layer interactive information transmitted by the MAC layer after the timer exceeds the timing threshold.

On the basis of the above embodiment, the inter-layer interactive information indicated by the MAC layer includes at least one of the following,
an indication that is indicative of a failure in transmission of the data packet, an indication that is indicative of a failure in transmission of a retransmission data packet of the current data packet, an instruction for duplicating and transmitting the current data packet, an instruction for retransmitting the current data packet, an instruction for retransmitting a subsequent data packet, an instruction for activating the PDCP duplication transmission, or an instruction for entering the survival time state.

On the basis of the above embodiment(s), the device includes a time starting module, which is configured to send the data packet at the radio link layer control protocol layer to the base station; and to control the radio link layer control protocol layer to start the timer.

On the basis of the above embodiment(s), the device includes a time starting module, which is configured to control the radio link layer control protocol layer to start the timer according to a second threshold time.

On the basis of the above embodiment (s), the function execution module 902 is configured to, prevent the duplication transmission of the data packet at the radio link layer control protocol layer when the terminal device enters the survival time state after the timer exceeds the timing threshold; and to duplicate the transmission of the data packet at the radio link layer control protocol layer when the terminal device enters the survival time state before the timer exceeds the timing threshold.

On the basis of the above embodiments, the feedback information includes retransmission schedule information, or, NACK information, or dedicated feedback information that triggers the survival time state.

FIG. 17 depicts a schematic diagram showing another device for configuring information according to an embodiment of the present disclosure, which can perform the method for configuring information according to an embodiment of the present disclosure, which has corresponding functional modules and beneficial effects corresponding to the method. The device can be implemented as software and/or hardware, and includes a parameter transmission module 912.

The parameter transmission module 912 is configured to transmit a parameter configuration information to a second node; where the parameter configuration information includes clock type indication information and/or clock synchronization accuracy indication information.

On the basis of the above embodiment(s), the parameter configuration information includes a handover request message or a clock synchronization request.

On the basis of the above embodiment(s), the clock synchronization request includes, a reference time information report control message, a reset message, a failure indication message, a base station-central unit configuration update message, a base station-distributed unit resource coordination request message, a paging message, and a system information delivery command message.

FIG. 18 depicts a schematic diagram showing another device for configuring information according to an embodiment of the present disclosure, which can perform the method for configuring information according to an embodiment of the present disclosure, which has corresponding functional modules and beneficial effects corresponding to the method. The device can be implemented as software and/or hardware, and includes a parameter receiving module 921 and a service execution module 922.

The parameter receiving module 921 is configured to acquire parameter configuration information sent by a first node, where the parameter configuration information includes clock type indication information and/or clock synchronization accuracy indication information.

The service execution module 922 is configured to perform the base station handover service according to the parameter configuration information.

On the basis of the above embodiment(s), the parameter configuration information includes a handover request message or a clock synchronization request.

On the basis of the above embodiment(s), the clock synchronization request includes, a reference time information report control message, a reset message, a failure indication message, a base station-central unit configuration update message, a base station-distributed unit resource coordination request message, a paging message, and a system information delivery command message.

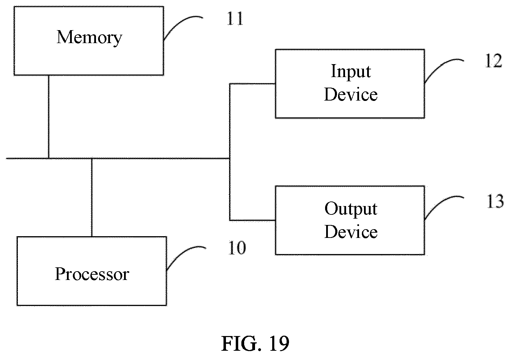

FIG. 19 depicts a schematic diagram showing an electronic apparatus according to an embodiment of the present disclosure. The electronic apparatus includes a processor 10, a memory 11, an input device 12, and an output device 13. One or more processors may be provided, while one processor 10 is shown by way of an example in FIG. 19. The processor 10, the memory 11, the input device 12, and the output device 13 in the electronic apparatus can be connected by a bus or other means. FIG. 19 shows the connection implemented as a bus by way of an example.

As a computer-readable storage medium, the memory 11 can be configured to store software programs, computer-executable programs and modules, such as modules corresponding to the device described in an embodiment of the present disclosure (e.g., the transmission module 901, the function execution module 902, or the information acquisition module 911, or the parameter receiving module 921 and the service execution module 922). The software programs, instructions and modules stored in the memory 11, when executed by the processor 10, cause the processor 10 to perform various functional applications and data processing of the electronic apparatus, to carry out any one of the methods as described above.

The memory 11 may generally include a program storage section and a data storage section, in which the program storage section may store an operating system and application programs for performing at least one operation, and the data storage section may store data created according to the operation of electronic apparatus, or the like. In addition, the memory 11 can include high-speed random-access memory and nonvolatile memory, such as at least one disk memory device, a flash memory device, or other nonvolatile solid-state memory devices. In some implementations, the memory 11 may include memories remotely located relative to the processor 10, and these remote memories may be connected to the electronic apparatus through a network. Examples of the above networks include, but are not limited to, the Internet, intranet, local area network, mobile communication network, and combinations thereof.

The input device 12 may be configured to receive input numeric or character information and generate key signal input related to user settings and functional control of the electronic apparatus. The output device 13 may include a display device such as a screen.

An embodiment of the present disclosure further provides a storage medium containing computer-executable instructions, which, when executed by a computer processor, causes the processor to carry out a method for configuring information, the method includes,
transmitting a data packet to a base station; and
performing a packet data convergence protocol (PDCP) duplication according to received feedback information of the data packet.

Alternatively, the method includes,
transmitting parameter configuration information to a second node; where the parameter configuration information includes clock type indication information and/or clock synchronization accuracy indication information.

Alternatively, the method includes,
acquiring parameter configuration information sent by a first node; where the parameter configuration information includes clock type indication information and/or clock synchronization accuracy indication information; and
performing a base station handover service according to the parameter configuration information.

From the description of the above embodiments, it is apparent to a person having ordinary skills in the art that the method of the above embodiments can be implemented by means of software with necessary general hardware, or by hardware, of course, but in many cases, the former is the better practice. Based on this understanding, the technical solution or the part that contributes to the prior art of the present disclosure can be embodied in the form of software products, which can be stored in a computer-readable storage medium such as floppy disk, Read-Only Memory (ROM), Random Access Memory (RAM), FLASH memory, hard disk or optical disk of a computer, etc., including several instructions to cause a computer device (which can be a personal computer, a server, or a network device, etc.) to carry out the methods described in various embodiments of the present disclosure.

It is worth noting that in the above embodiment of the device as described above, each unit and module included is only divided according to the functional logic, but it is not limited to the above division, as long as the corresponding functions can be realized. In addition, the specific names of the functional units are intended for distinguishing the units from each other, and are not intended to limit the scope of the present disclosure.

It shall be appreciated by a person having ordinary skills in the art that all or some of the steps, functional modules/units in the methods, systems and devices disclosed above can be implemented as software, firmware, hardware and their appropriate combinations.

In the hardware implementation, the division between functional modules/ units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. The computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Some embodiments of the embodiments of the present disclosure are illustrated above in conjunction with the drawings, and the present disclosure is not limited thereto. Any modifications, equivalents, alternations, or improvements, made within the scope of the present disclosure shall be included in the scope of the present disclosure.

## Claims

1. A method for configuring information, which is applied to a terminal device, the method comprising,
transmitting a data packet to a base station; and
performing a packet data convergence protocol (PDCP) duplication transmission according to a reception of feedback information for the data packet.

2. The method as claimed in claim 1, further comprising, starting a timer in response to a transmission of the data packet to the base station.

3. The method as claimed in claim 2, further comprising, stopping the timer, which comprises,
stopping the timer in response to a number of received retransmission schedules for the data packet being greater than or equal to a first threshold number before the timer does not exceed a timing threshold; wherein the retransmission schedules are received by a media access control (MAC) layer.

4. The method as claimed in claim 2, further comprising, stopping the timer, which comprising,
stopping the timer, in response to a number of received retransmission schedules for the data packet being less than a first threshold number before the timer exceeds a timing threshold; wherein the retransmission schedules are received by an MAC layer.

5. The method as claimed in claim 3 or claim 4, wherein the first threshold number is configured by the base station.

6. The method as claimed in claim 1, wherein starting the timer in response to the transmission of the data packet to the base station, comprises,
transmitting the data packet to the base station at an MAC layer; and
controlling the MAC layer to start the timer according to a second threshold time.

7. The method as claimed in claim 6, wherein the second threshold time is configured by the base station.

8. The method as claimed in claim 5 or claim 7, wherein at least one of the second threshold time, or the first threshold number is configured by the base station through a radio resource control (RRC) message; wherein the RRC message comprises at least one of, an RRCReestablishment message, an RRCReconfiguration message, an RRCResume message, an RRCReject message, or an RRCSetup message.

9. The method as claimed in claim 6, wherein performing the PDCP duplication transmission according to the reception of the feedback information for the data packet comprises,
preventing a duplication transmission for the data packet at the MAC layer, in response to an entrance of the terminal device to a survival time (ST) state after the timer exceeds a timing threshold; and
performing the duplication transmission for the data packet at the MAC layer, in response to the entrance of the terminal device to the ST state before the timer exceeds the timing threshold.

10. The method as claimed in claim 1, wherein performing the PDCP duplication transmission according to the reception of the feedback information for the data packet comprises,
determining that the terminal device is in an ST state according to the reception of the feedback information for the data packet;
triggering a transmission of inter-layer interactive information to a PDCP layer according to the reception of the feedback information for the data packet; and
performing the PDCP duplication transmission according to the ST state.

11. The method as claimed in claim 1, wherein performing the PDCP duplication transmission according to the reception of the feedback information for the data packet comprises,
transmitting the data packet to the base station and starting a timer; and
performing at least one of operations of, triggering the PDCP duplication transmission, determining that the terminal device is in a ST state, or triggering a transmission of inter-layer interactive information, in response to a number of received retransmission schedules for the data packet being greater than or equal to a first threshold number before the timer exceeds a timing threshold; wherein the retransmission schedules are received by an MAC layer.

12. The method as claimed in claim 1, wherein performing the PDCP duplication transmission according to the reception of the feedback information for the data packet comprises,
transmitting the data packet to the base station and starting a timer; and
performing at least one of operations of, triggering the PDCP duplication transmission, determining that the terminal device is in a ST state, or triggering a transmission of inter-layer interactive information, in response to a reception of a retransmission schedule for the data packet after the timer exceeds a timing threshold, wherein the retransmission schedule is received by an MAC layer.

13. The method as claimed in claim 1, wherein performing the PDCP duplication transmission according to the reception of the feedback information for the data packet comprises,
instructing a PDCP layer to trigger the PDCP duplication transmission according to inter-layer interactive information from an MAC layer.

14. The method as claimed in claim 13, wherein the interlayer interactive information comprises at least one of,
an instruction for activating the PDCP duplication transmission,
an instruction for entrance of the survival time state,
an indication that is indicative of a failure in transmission of the data packet,
an indication that is indicative of a failure in transmission of a retransmission data packet of the current data packet,
an instruction for duplicating and transmitting the current packet,
an instruction for retransmitting the current packet,
an instruction for triggering the PDCP duplication transmission for the current packet, or
an instruction for triggering the PDCP duplication transmission for a subsequent packet.

15. The method as claimed in claim 1, wherein performing the PDCP duplication transmission according to the reception of the feedback information for the data packet comprises,
performing at least one of operations of triggering the PDCP duplication transmission, determining that the terminal device is in a ST state, or triggering a transmission of inter-layer interactive information, in response to a number of received feedback information for the data packet being greater than or equal to the first threshold number.

16. The method as claimed in claim 1, wherein performing the PDCP duplication transmission according to the reception of the feedback information for the data packet comprises,
performing at least one of operations of, triggering the PDCP duplication transmission, determining that the terminal device is in a ST state, or triggering a transmission of inter-layer interactive information, in response to a number of received feedback information for the data packet being less than a first threshold number and a time at which one of the feedback information is received is greater than or equal to a second threshold time.

17. The method as claimed in claim 1, wherein performing the PDCP duplication transmission according to the reception of the feedback information for the data packet comprises,
performing at least one of operations of, triggering the PDCP duplication transmission, determining that the terminal device is in an ST state, or triggering a transmission of inter-layer interactive information, in response to a time at which the feedback information is received being greater than or equal to a second threshold time.

18. The method as claimed in claim 1, wherein performing the PDCP duplication transmission according to the reception of the feedback information for the data packet comprises,
performing at least one of operations of, triggering the PDCP duplication transmission, determining that the terminal device is in a ST state, or triggering a transmission of inter-layer interactive information, in response to a number of received feedback information for the data packet being greater than or equal to a first threshold number and a time at which one of the received feedback information is received being less than a second threshold time.

19. The method as claimed in any one of claims 16 to 18, wherein the time when the feedback information is received comprises at least one of,
the time when the feedback information is received; or
a physical resource time when the feedback information is transmitted; or
the time when the feedback information is detected; or
a time interval between the time when the feedback information is received and the time when the data packet is initially sent; or
the time interval between the time when the feedback information is detected and the time when the data packet is initially sent.

20. The method as claimed in claim 18, wherein triggering the PDCP duplication transmission comprises,
controlling the MAC layer, to send an instruction for activating the PDCP duplication transmission for a retransmission of the current data packet, to an PDCP layer.

21. The method as claimed in claim 17, wherein triggering the PDCP duplication transmission comprises,
controlling the MAC layer, to send an instruction for activating the PDCP duplication transmission for a retransmission of a subsequent data packet, to an PDCP layer.

22. The method as claimed in claim 1, further comprising, starting a timer in response to a transmission of the data packet to the base station, which comprises,
transmitting, by a PDCP layer, the data packet to the base station; and
controlling the PDCP layer to start the timer.

23. The method as claimed in claim 22, further comprising, stopping the timer, which comprises,
stopping the timer, in response to a number of indications indicating a failure in transmission of the data packet being greater than or equal to a first threshold number before the timer does not exceed the timing threshold; wherein the indications are received by the PDCP layer.

24. The method as claimed in claim 22, further comprising, stopping the timer, which comprises,
stopping the timer in response to the timer exceeding a timing threshold and a number of received indications indicating a failure in transmission of the data packet being less than a first threshold number; wherein the indications are received by the PDCP layer.

25. The method as claimed in claim 22, wherein performing the PDCP duplication transmission according to the reception of the feedback information for the data packet comprises,
triggering the PDCP duplication transmission for a current data packet in response to a reception by the PDCP layer, inter-layer interactive information transmitted by an MAC layer before the timer exceeds a timing threshold.

26. The method as claimed in claim 22, wherein performing the PDCP duplication transmission according to the reception of the feedback information for the data packet comprises,
triggering the PDCP duplication transmission for a subsequent data packet in response to a reception by the PDCP layer, inter-layer interactive information transmitted by an MAC layer after the timer exceeds a timing threshold.

27. The method as claimed in claim 25 or claim 26, wherein the interlayer interactive information indicated by the MAC layer comprises at least one of,
an indication that is indicative of a failure in transmission of the data packet,
an indication that is indicative of a failure in transmission of a retransmission data packet of the current data packet,
an instruction for duplicating and transmitting the current packet,
an instruction for retransmitting the current packet,
an instruction for retransmitting a subsequent packet,
an instruction for activating the PDCP duplication transmission, or
an instruction for an entrance of the survival time state.

28. The method as claimed in claim 1, further comprising, starting a timer in response to a transmission of the data packet to the base station, which comprises,
transmitting by a radio link layer control protocol layer, the data packet to the base station; and
controlling the radio link layer control protocol layer to start the timer.

29. The method as claimed in claim 28, wherein controlling the radio link layer control protocol layer to start the timer, comprises,
controlling the radio link layer control protocol layer to start the timer according to a second threshold.

30. The method as claimed in claim 28, wherein performing the PDCP duplication transmission according to the reception of the feedback information for the data packet comprises,
preventing a duplication transmission for the data packet at the radio link layer control protocol layer, in response to an entrance of the terminal device to an ST state after the timer exceeds a timing threshold; and
performing the duplication transmission for the data packet at the radio link layer control protocol layer, in response to the entrance of the terminal device to the ST state before the timer exceeds the timing threshold.

31. The method as claimed in claim 1, wherein the feedback information comprises retransmission schedule information, or NACK information, or dedicated feedback information that triggers an ST state.

32. A method for configuring information, which is applied to a first node, the method comprising,
sending parameter configuration information to a second node; wherein the parameter configuration information comprises at least one of, clock type indication information, or clock synchronization accuracy indication information.

33. The method as claimed in claim 32, wherein the parameter configuration information comprises a handover request message or a clock synchronization request.

34. The method as claimed in claim 33, wherein the clock synchronization request comprises, a reference time information report control message, a reset message, a failure indication message, a base station-central unit configuration update message, a base station-distributed unit resource coordination request message, a paging message, and a system information delivery command message.

35. A method for configuring information, which is applied to a second node, the method comprising,
acquiring parameter configuration information sent by a first node; wherein the parameter configuration information comprises at least one of, clock type indication information, or clock synchronization accuracy indication information; and
performing a base station handover service according to the parameter configuration information.

36. The method as claimed in claim 35, wherein the parameter configuration information comprises a handover request message or a clock synchronization request.

37. The method as claimed in claim 36, wherein the clock synchronization request comprises, a reference time information report control message, a reset message, a failure indication message, a base station-central unit configuration update message, a base station-distributed unit resource coordination request message, a paging message, and a system information delivery command message.

38. An electronic apparatus, comprising,
at least one processor; and
a memory configured to store at least one program which,
when executed by the at least one processor, causes the at least one processor to carry out the method as claimed in any one of claims 1 to 37.

39. A computer-readable storage medium storing thereon at least one program executable by at least one processor, which when executed by the processor, causes the processor to carry out the method as claimed in any one of claims 1 to 37.
